# EUROPÄISCHE PATENTSCHRIFT

(11) **EP 3 910 746 B1**
(45) Veröffentlichungstag und Bekanntmachung des Hinweises auf die Patenterteilung: **14.10.2026**
(21) Anmeldenummer: 21305477.8
(22) Anmeldetag: 12.04.2021
(51) Int. Cl.: H02G 3/12

(54) **BEFESTIGUNGSANORDNUNG**
MOUNTING ASSEMBLY
AGENCEMENT DE FIXATION

(30) Priorität: 11.05.2020 DE 102020112731
(43) Veröffentlichungstag der Anmeldung: 17.11.2021
(73) Patentinhaber: Schneider Electric Industries SAS, 92500 Rueil-Malmaison (FR)
(72) Erfinder: GÖRLICH, Wolfgang, 53804 Much (DE)
(74) Vertreter: Manitz Finsterwald Patent- und Rechtsanwaltspartnerschaft mbB

(56) Entgegenhaltungen:
- EP-A1- 3 506 444
- EP-A2- 1 187 285
- EP-A2- 1 710 881
- WO-A1-2009/027469
- ES-A1- 2 205 995
- FR-A1- 2 866 758
- FR-A1- 2 937 802

## Beschreibung

Die vorliegende Erfindung betrifft eine Befestigungsanordnung nach dem Oberbegriff des Anspruchs 1 (FR 2 937 802 A1). Ähnliche Befestigungsanordnungen sind aus der ES 2 205 995 A1, FR 2 866 758 A1, EP 1 187 285 A2, EP 1 710 881 A2, EP 3 506 444 A1 oder der WO 2009/027469 A1 bekannt.

Befestigungsanordnungen der vorstehend genannten Art dienen zur Befestigung von elektrischen Installationsgeräten wie beispielsweise Schaltern, Tastern, Steckdosen, Dimmern und dergleichen und sind aus dem Stand der Technik bekannt. Bei modernen elektrischen Installationsgeräten werden in zunehmendem Maße elektronische Bauteile verbaut, so dass der für die Befestigungsanordnung zur Verfügung stehende Raum zunehmend reduziert wird. Gleichzeitig ist es bei bestimmten Anwendungsfällen wünschenswert, einen sehr großen Spreizwinkel zu erzielen, d.h. die Kralle möglichst weit aus dem Grundkörper auszuschwenken, wenn der zur Verfügung stehende Einbauraum nicht nur geringfügig größer ist wie die Außenkontur des Installationsgeräts.

Es ist deshalb die Aufgabe der vorliegenden Erfindung, eine Befestigungsanordnung der vorstehenden Art derart weiterzubilden, dass bei einem minimierten Platzbedarf innerhalb des Grundkörpers eine maximale Spreizstellung erzielt werden kann.

Die Lösung dieser Aufgabe erfolgt durch die Merkmale des Anspruchs 1.

Mit der erfindungsgemäßen Lösung kann einerseits die Kralle und andererseits die Kombination aus Schraube und Mutter jeweils eine eigene Schwenkbewegung durchführen, so dass durch geeignete Gestaltung der Schrägfläche dafür gesorgt werden kann, dass einerseits die Kralle in der eingeschwenkten Stellung vollständig in einem minimierten Einbauraum aufgenommen ist und andererseits die Kralle nach vollständigem Anziehen der Mutter weit aus dem Grundkörper ausgeschwenkt bzw. ausgespreizt ist. Dennoch kann hierdurch die Länge der Schenkel der Kralle gering gehalten werden, so dass der erforderliche Einbauraum ebenfalls klein sein kann. Da der Grundkörper eine Anlagefläche für den Verbindungssteg aufweist, die abgewinkelt ausgebildet ist, lässt sich die Schwenkbewegung bzw. das Ausspreizen der Kralle steuern, wobei durch die Neigung der Anlagefläche der maximale Spreizwinkel festgelegt werden kann.

Vorteilhafte Ausführungsformen der Erfindung sind in der Beschreibung, der Zeichnung sowie den Unteransprüchen beschrieben.

Nach einer ersten vorteilhaften Ausführungsform kann ein Lot auf den Verbindungssteg parallel zu den beiden Schenkeln der Kralle verlaufen. Eine solche Kralle lässt sich auf einfache Weise sehr kostengünstig herstellen, da die Kralle aus einem Stanzbiegeteil hergestellt werden kann, das zur Ausbildung der Schenkel lediglich an zwei Stellen rechtwinklig umgebogen werden muss. Hierdurch verläuft die innere Kante zwischen Verbindungssteg und Schenkel rechtwinklig zur Längsachse des benachbarten Schenkels und die Innenwinkel zwischen der Längsachse der Schenkel und der Längsachse des Verbindungssteges betragen 90°.

Nach einer weiteren vorteilhaften Ausführungsform kann der Verbindungssteg in der Spreizstellung an einer Anlagefläche des Grundkörpers anliegen, die gegenüber dessen Basisfläche geneigt ist. Unter der Basisfläche wird hierbei die rückseitige Fläche des Installationsgerätes verstanden, d.h. eine Fläche, die parallel zur Vorderseite bzw. zur vorderen Fläche des Installationsgerätes verläuft. Durch eine geneigte Anlagefläche kann die Schwenkbewegung der Kralle ausgelöst werden, wenn die Mutter durch Einschrauben der Schraube gegen den Verbindungssteg drückt bzw. den Verbindungssteg mit Kraft beaufschlagt. Hierdurch wird eine Kippbewegung der Kralle ausgelöst, die dafür sorgt, dass die unteren Enden der Kralle vom Grundkörper ausschwenken.

Nach einer weiteren vorteilhaften Ausführungsform kann eine Zwischenstellung beim Übergang von der eingeschwenkten Stellung in die Spreizstellung eine Stellung sein, in der die Schenkel der Kralle parallel zu einem Lot auf die Basisfläche orientiert sind. Dies bedeutet, dass die Kralle in der vollständig eingeschwenkten Stellung - ausgehend von einem Lot auf die Basisfläche - um einen negativen spitzen Winkel eingeschwenkt ist und in der Spreizstellung um einen positiven spitzen Winkel ausgespreizt ist. Auf diese Weise können am unteren Ende der Schenkel vorgesehene Spitzen der Kralle vollständig in den Grundkörper eingefahren werden, so dass bei Transport oder Montage keine Verletzungsgefahr besteht.

Nach einer weiteren vorteilhaften Ausführungsform kann eine Rasteinrichtung vorgesehen sein, welche die Kralle in der eingeschwenkten Stellung in dem Grundkörper fixiert. Durch eine solche Rasteinrichtung kann die Kralle vor Auslieferung in den Grundkörper eingedrückt werden, so dass die Kralle in der vollständig eingeschwenkten Stellung innerhalb des Grundkörpers verbleibt. Bei der Montage kann die Kralle dann durch Eindrehen der Schraube in die Mutter ausgeschwenkt werden, wobei die Rasteinrichtung die Kralle selbsttätig freigibt.

Nach einer weiteren vorteilhaften Ausführungsform kann die Rasteinrichtung zumindest eine an einem Schenkel der Kralle vorgesehene Erhebung umfassen, beispielsweise einen eingeprägten Vorsprung. Eine derartige Erhebung kann dann mit einem an dem Grundkörper vorgesehenen Vorsprung oder dergleichen zusammenwirken, um die Kralle in dem Grundkörper zu halten.

Nach einer weiteren vorteilhaften Ausführungsform kann die Mutter mit der Schrägfläche versehen sein. Eine solche Mutter lässt sich kostengünstig herstellen und bewirkt, dass bei Festziehen der Schraube ein Kippmoment auf die Kralle ausgeübt wird, so dass diese relativ zu dem Grundkörper verschwenkt.

Um den Ausschwenkwinkel der Kralle noch weiter zu maximieren, kann nach einer weiteren vorteilhaften Ausführungsform sowohl die Mutter mit der Schrägfläche versehen sein wie auch der Quersteg eine Schrägfläche bilden. In diesem Fall sind die beiden Schrägflächen gegenläufig zueinander orientiert, was den Ausschwenkwinkel der Schenkel nochmals vergrößert.

Nach einer weiteren vorteilhaften Ausführungsform kann der Grundkörper einen Aufnahmeraum für die Kralle aufweisen, in dem die Kralle in der eingeschwenkten Stellung vollständig aufgenommen ist. Dies erleichtert nicht nur den Transport und den Einbau des Installationsgerätes, sondern schließt auch Verletzungen aus, die durch die Kralle und insbesondere durch Spitzen der Kralle verursacht werden könnten.

Nach einem weiteren Aspekt betrifft die vorliegende Erfindung eine Einbaudose und ein elektrisches Installationsgerät mit einer Befestigungsanordnung der vorstehend beschriebenen Art.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1 bis Fig. 5: eine Teilschnittansicht durch ein elektrisches Installationsgerät mit verschiedenen Schwenkstellungen der Kralle;
- Fig. 6: eine perspektivische Ansicht des Installationsgerätes von Fig. 5; und
- Fig. 7: eine vergrößerte Teilschnittansicht eines Installationsgerätes mit vollständig im Grundkörper aufgenommener Kralle.

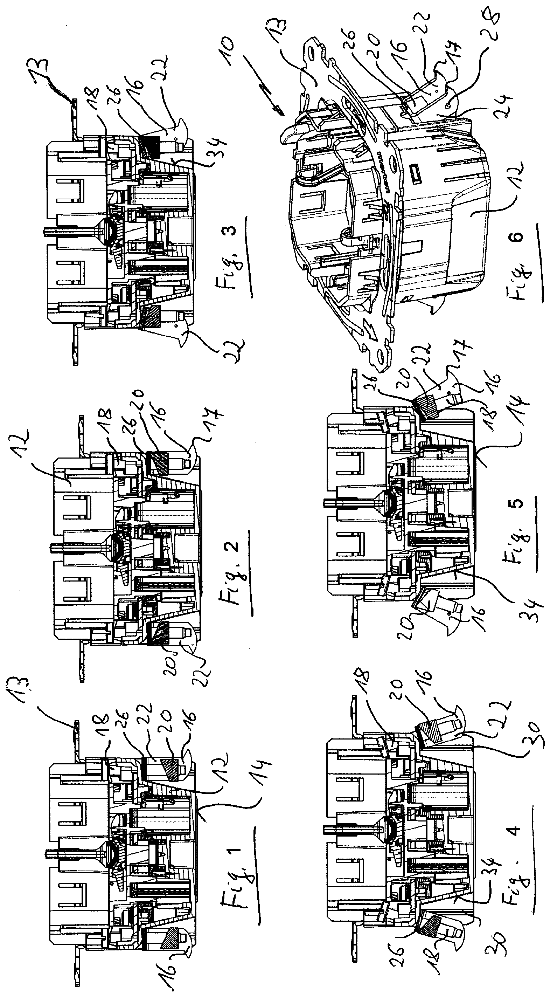

Die Fig. 1 bis Fig. 6 zeigen ein elektrisches Installationsgerät in Form einer Steckdose 10, die einen Grundkörper 12 und einen Tragring 14 aufweist und die auf übliche Weise mit Steckkontakten und Erdungskontakten versehen ist. Um das Installationsgerät in einer Dose oder einer Wand befestigen zu können, weist das Installationsgerät 10 eine Befestigungsanordnung auf, die den Grundkörper 12 umfasst, der eine Basisfläche 16 aufweist, welche die rückwärtige Fläche des Installationsgerätes bildet. Bei einer Steckdose verläuft die Basisfläche 14 somit senkrecht zur Einsteckrichtung. Im eingebauten Zustand verläuft die Basisfläche 14 parallel zur Wand.

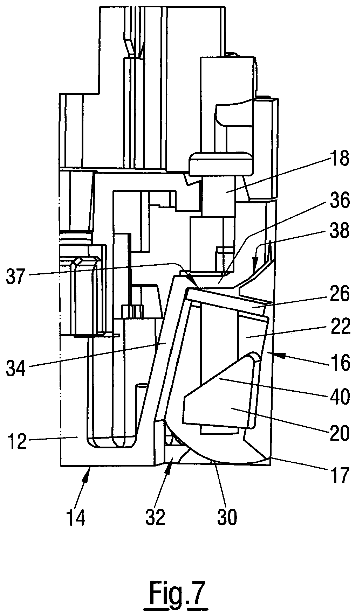

Zur Befestigung des Installationsgerätes sind an zwei gegenüberliegenden Seiten des Grundkörpers 12 zwei Krallen 16 vorgesehen, die durch Eindrehen einer Schraube 18 in eine Mutter 20 von einer eingeschwenkten Stellung (Fig. 7) in eine Spreizstellung (Fig. 6) verschwenkt werden können. Die beiden Schrauben 18 sind dabei in einer Öffnung des Grundkörpers 12 aufgenommen, die so dimensioniert ist, dass jede Schraube 18 relativ zu dem Grundkörper 12 um eine zur Basisfläche 14 senkrechte Achse verschwenkt werden kann.

Wie die Figuren verdeutlichen, ist die Kralle 16 U-förmig und besteht aus zwei Schenkeln 22 und 24, die über einen Verbindungssteg 26 miteinander verbunden sind. Bei dem dargestellten Ausführungsbeispiel verläuft ein Lot auf die Oberseite des Verbindungssteges 26 parallel zur Längsachse der beiden Schenkel 22 und 24, d.h. die beiden Schenkel sind rechtwinklig vom Verbindungssteg 26 abgewinkelt. Weiterhin ist in dem Verbindungssteg eine Öffnung für den Durchtritt der Schraube 18 vorgesehen, die so bemessen ist, dass die Kralle 16 relativ zur Schraube 18 verschwenken kann. Weiterhin ist im unteren Bereich jedes Schenkels 22 und 24 eine eingeprägte Erhebung 28 (Fig. 6) vorgesehen, die mit einem am Grundkörper vorgesehenen Steg 30 zusammenwirkt, um die Kralle 16 in ihrer vollständig eingeschwenkten Stellung (Fig. 7) zu halten. Die unteren Enden jedes Schenkels 22 und 24 sind abgerundet ausgebildet und in Richtung der Außenseite des Grundkörpers 12 jeweils zu einer Spitze 17 verlängert.

Wie insbesondere Fig. 7 verdeutlicht, ist in dem Grundkörper 12 ein Aufnahmeraum 32 für die Kralle 16 vorgesehen, in dem die Kralle in ihrer eingeschwenkten Stellung vollständig aufgenommen ist. Dies gilt auch für die beiden Spitzen 17 der Kralle 16, die in der eingeschwenkten Stellung nicht über die Außenkontur des Grundkörpers 12 vorstehen.

Der Aufnahmeraum 32 weist eine schräg verlaufende Rückwand 34 auf, an die sich eine Anlagewand 36 für den Verbindungssteg 26 anschließt. Die Anlagewand 36 ist bei dem dargestellten Ausführungsbeispiel abgewinkelt ausgebildet und weist eine erste Anlagefläche 37 auf, die parallel zur Basisfläche 14 verläuft, sowie eine zweite Anlagefläche 38, die gegenüber der Basisfläche 14 geneigt ist. Die schräg verlaufende Rückwand 34 ist so geneigt, dass sie im Bereich des Verbindungssteges 26 einen geringeren Abstand zur Außenkontur des Grundkörpers 12 wie im Bereich der Basisfläche 14 aufweist. Hierdurch kann die Kralle 16 im Inneren des Grundkörpers 12 schräg aufgenommen werden.

Weiterhin zeigen die Figuren, dass jede Mutter 20 eine Schrägfläche 40 (Fig. 7) aufweist, die in Richtung des Kopfes der Schraube 18 orientiert ist und die (bzw. deren Lot) vor dem Verschwenken der Kralle in Richtung des Aufnahmeraums 32 weist. Bei Einschrauben der Schraube 18 in die Mutter 20 erfolgt somit die Kraftbeaufschlagung zwischen der Mutter 20 und dem Verbindungssteg 26 über die Schrägfläche 40.

Fig. 7 zeigt eine Transportstellung, in der die Kralle 16 vollständig in dem Aufnahmeraum 32 aufgenommen ist, so dass die Spitzen 17 der Kralle nicht aus dem Grundkörper 12 vorstehen. In dieser Position sind die beiden Erhebungen 28 jeder Kralle hinter den Stegen 30 in dem Aufnahmeraum verrastet. Fig. 1 zeigt eine Position der Krallen, bei der die Verrastung manuell überwunden ist. An sich kann jedoch jede Kralle aus der in Fig. 7 dargestellten vollständig eingeschwenkten Position durch Eindrehen der Schraube 18 in die in Fig. 2 dargestellte Position gebracht werden, in der die Spitzen 17 der Kralle schon aus dem Grundkörper 12 vorstehen. In dieser Position hat sich die Mutter in Richtung des Schraubenkopfes bewegt, so dass die obere Kante der Schrägfläche 40 an dem Verbindungssteg 26 anliegt. Durch weiteres Eindrehen der Schraube 18 übt die Mutter 20 ein Kippmoment auf die Kralle 16 aus, so dass diese verschwenkt, wobei jedoch die Mutter zusammen mit der Schraube beim Verschwenken der Kralle unabhängig von der Kralle relativ zu dem Grundkörper 12 verschwenkbar ist. So zeigt ein Vergleich der Fig. 1 bis 5, dass mit zunehmendem Einschrauben der Schraube 18 in die Mutter 20 zunächst die Kralle 16 einen größeren Schwenkwinkel wie die Schraube 18 besitzt, dass jedoch zu einem späteren Zeitpunkt Kralle 16 und Schraube 18 um den gleichen Winkel ausgeschwenkt sind. Mit weiterem Einschrauben wird die Kralle 16 von der Mutter 20 mit ihrem Verbindungssteg 26 gegen die Anlagefläche 38 gedrückt, so dass die Kralle 16 weiter ausgeschwenkt ist wie die Schraube 18.

Nach einer weiteren nicht dargestellten Ausführungsform könnte der Quersteg 26 nicht rechtwinklig zu den Schenkeln, sondern geneigt zu diesen verlaufen, so dass eine weitere Schrägfläche gebildet ist, die gegenläufig zu der Schrägfläche 40 der Mutter 20 orientiert und in Richtung der Außenseite des Aufnahmeraums 32 gerichtet ist. Hierdurch lässt sich der maximale Schwenkwinkel der Schenkel noch weiter vergrößern.

## Patentansprüche

1. Befestigungsanordnung zur Befestigung eines elektrischen Installationsgerätes (10), umfassend einen Grundkörper (12) mit einer Basisfläche (14), und mit zumindest einer Kralle (16), die von einer in eine Mutter (20) eingeschraubten Schraube (18) an dem Grundkörper (12) gehalten und durch Drehen der Schraube (18) von einer eingeschwenkten Stellung in eine Spreizstellung verschwenkbar ist, wobei die Kralle (16) U-förmig ist und zwei Schenkeln (22, 24) aufweist, die über einen Verbindungssteg (26) miteinander verbunden sind, wobei zum Verschwenken aus der eingeschwenkten Stellung in die Spreizstellung eine Kraftbeaufschlagung zwischen der Mutter (20) und dem Verbindungssteg (26) über eine zwischen Mutter (20) und Verbindungssteg (26) ausgebildete Schrägfläche (40) erfolgt, wobei die Mutter (20) beim Verschwenken der Kralle (16) zusammen mit der Schraube (18) aber unabhängig von der Kralle (16) relativ zu dem Grundkörper (12) verschwenkbar ist,
**dadurch gekennzeichnet, dass** der Grundkörper (12) eine Anlagefläche (36) für den Verbindungssteg (26) aufweist, die abgewinkelt ausgebildet ist,
wobei die Anlagefläche (36) eine erste Anlagefläche (37) aufweist, die parallel zur Basisfläche (14) verläuft, sowie eine zweite Anlagefläche (38), die gegenüber der Basisfläche (14) geneigt ist.

2. Befestigungsanordnung nach Anspruch 1,
**dadurch gekennzeichnet,**
**dass** ein Lot auf den Verbindungssteg (26) parallel zu den beiden Schenkeln (22, 24) verläuft.

3. Befestigungsanordnung nach Anspruch 1 oder 2,
**dadurch gekennzeichnet,**
**dass** der Verbindungssteg (26) in der Spreizstellung an der zweiten Anlagefläche (38) des Grundkörpers (12) anliegt.

4. Befestigungsanordnung nach einem der vorstehenden Ansprüche,
**dadurch gekennzeichnet,**
**dass** eine Zwischenstellung beim Übergang von der eingeschwenkten Stellung in die Spreizstellung eine Stellung ist, in der die Schenkel (22, 24) der Kralle (16) parallel zu einem Lot auf die Basisfläche (14) orientiert sind.

5. Befestigungsanordnung nach einem der vorstehenden Ansprüche,
**dadurch gekennzeichnet,**
**dass** eine Rasteinrichtung (28, 30) vorgesehen ist, welche die Kralle (16) in der eingeschwenkten Stellung in dem Grundkörper (12) fixiert.

6. Befestigungsanordnung nach Anspruch 5,
**dadurch gekennzeichnet,**
**dass** die Rasteinrichtung (28, 30) zumindest eine an einem Schenkel (22, 24) der Kralle (16) vorgesehene Erhebung (28) umfasst.

7. Befestigungsanordnung nach einem der vorstehenden Ansprüche,
**dadurch gekennzeichnet,**
**dass** die Mutter (20) mit der Schrägfläche (40) versehen ist.

8. Befestigungsanordnung nach einem der vorstehenden Ansprüche,
**dadurch gekennzeichnet,**
**dass** die Mutter (20) mit der Schrägfläche (40) versehen ist, und dass der Quersteg eine Schrägfläche bildet.

9. Befestigungsanordnung nach einem der vorstehenden Ansprüche,
**dadurch gekennzeichnet,**
**dass** der Grundkörper (12) einen Aufnahmeraum (32) für die Kralle (16) aufweist, in dem die Kralle (16) in der eingeschwenkten Stellung vollständig aufgenommen ist.

10. Einbaudose für ein elektrisches Installationsgerät, umfassend eine Befestigungsanordnung nach einem der vorstehenden Ansprüche.

11. Elektrisches Installationsgerät mit einer Befestigungsanordnung nach einem der vorstehenden Ansprüche 1 - 9.

## Claims

1. A fastening arrangement for fastening an electrical installation device (10), comprising a base body (12) having a base surface (14) and having at least one claw (16), which is held at the base body (12) by a screw (18) screwed into a nut (20) and which is pivotable by turning the screw (18) from a pivoted-in position into a spreading position, wherein the claw (16) is U-shaped and has two legs (22, 24) which are connected to one another via a connecting web (26), wherein, for pivoting from the pivoted-in position into the spreading position, an application of force between the nut (20) and the connecting web (26) takes place via an inclined surface (40) formed between the nut (20) and the connecting web (26), wherein the nut (20), when pivoting the claw (16), is pivotable together with the screw (18) but independently of the claw (16) relative to the base body (12), **characterized in that** the base body (12) has a contact surface (36) for the connecting web (26), said contact surface being formed at an angle,
wherein
the contact surface (36) has a first contact surface (37), which extends parallel to the base surface (14), as well as a second contact surface (38) which is inclined relative to the base surface (14).

2. A fastening arrangement according to claim 1,
**characterized in that**
a perpendicular to the connecting web (26) extends parallel to the two legs (22, 24).

3. A fastening arrangement according to claim 1 or 2,
**characterized in that**
the connecting web (26) contacts the second contact surface (38) of the base body (12) in the spreading position.

4. A fastening arrangement according to any one of the preceding claims,
**characterized in that**
an intermediate position during the transition from the pivoted-in position into the spreading position is a position in which the legs (22, 24) of the claw (16) are oriented parallel to a perpendicular to the base surface (14).

5. A fastening arrangement according to any one of the preceding claims,
**characterized in that**
a latching device (28, 30) is provided that fixes the claw (16) in the pivoted-in position in the base body (12).

6. A fastening arrangement according to claim 5,
**characterized in that**
the latching device (28, 30) comprises at least one elevation (28) which is provided at a leg (22, 24) of the claw (16).

7. A fastening arrangement according to any one of the preceding claims,
**characterized in that**
the nut (20) is provided with the inclined surface (40).

8. A fastening arrangement according to any one of the preceding claims,
**characterized in that**
the nut (20) is provided with the inclined surface (40), and **in that** the transverse web forms an inclined surface.

9. A fastening arrangement according to any one of the preceding claims,
**characterized in that**
the base body (12) has a receiving space (32) for the claw (16) in which the claw (16) is fully received in the pivoted-in position.

10. An installation box for an electrical installation device, comprising a fastening arrangement according to any one of the preceding claims.

11. An electrical installation device comprising a fastening arrangement according to any one of the preceding claims 1 to 9.

## Revendications

1. Agencement de fixation pour fixer un appareil d'installation électrique (10), comprenant un corps de base (12) avec une surface de base (14), et avec au moins une griffe (16), qui est maintenue par une vis (18) vissée dans un écrou (20) sur le corps de base (12) et peut pivoter en tournant la vis (18) d'une position pivotée vers l'intérieur à une position d'écartement, dans lequel la griffe (16) est en forme de U et présente deux branches (22, 24) qui sont reliées l'une à l'autre par une barrette de liaison (26), dans lequel, pour faire pivoter la griffe de la position pivotée vers l'intérieur à la position d'écartement, une application d'une force entre l'écrou (20) et la barrette de liaison (26) a lieu via une surface inclinée (40) formée entre l'écrou (20) et la barrette de liaison (26), dans lequel l'écrou (20), lors du pivotement de la griffe (16), conjointement avec la vis (18), mais indépendamment de la griffe (16) par rapport au corps de base (12), est pivotable,
**caractérisé en ce que** le corps de base (12) présente une surface d'appui (36) pour la barrette de liaison (26), qui est formée en angle,
dans lequel
la surface d'appui (36) présente une première surface d'appui (37) qui s'étend parallèlement à la surface de base (14), ainsi qu'une seconde surface d'appui (38) qui est inclinée par rapport à la surface de base (14).

2. Agencement de fixation selon la revendication 1,
**caractérisé en ce que**
une perpendiculaire à la barrette de liaison (26) s'étend parallèlement aux deux branches (22, 24).

3. Agencement de fixation selon la revendication 1 ou 2,
**caractérisé en ce que**
la barrette de liaison (26) est en appui contre la seconde surface d'appui (38) du corps de base (12) dans la position d'écartement.

4. Agencement de fixation selon l'une des revendications précédentes,
**caractérisé en ce que**
une position intermédiaire lors de la transition de la position pivotée vers l'intérieur à la position d'écartement est une position dans laquelle les branches (22, 24) de la griffe (16) sont orientées parallèlement à une perpendiculaire à la surface de base (14).

5. Agencement de fixation selon l'une des revendications précédentes,
**caractérisé en ce que**
un dispositif d'encliquetage (28, 30) est prévu, qui fixe la griffe (16) dans la position pivotée vers l'intérieur dans le corps de base (12).

6. Agencement de fixation selon la revendication 5,
**caractérisé en ce que**
le dispositif d'encliquetage (28, 30) comprend au moins une saillie (28) prévue sur une branche (22, 24) de la griffe (16).

7. Agencement de fixation selon l'une des revendications précédentes,
**caractérisé en ce que**
l'écrou (20) est pourvu de la surface inclinée (40).

8. Agencement de fixation selon l'une des revendications précédentes,
**caractérisé en ce que**
l'écrou (20) est pourvu de la surface inclinée (40), et **en ce que** la barrette transversale forme une surface inclinée.

9. Agencement de fixation selon l'une des revendications précédentes,
**caractérisé en ce que**
le corps de base (12) présente un espace de réception (32) pour la griffe (16) dans lequel la griffe (16) est entièrement reçue dans la position pivotée vers l'intérieur.

10. Boîte d'encastrement pour un appareil d'installation électrique, comprenant un agencement de fixation selon l'une des revendications précédentes.

11. Appareil d'installation électrique avec un agencement de fixation selon l'une des revendications précédentes 1 à 9.
